(19)

**Europäisches Patentamt**
**European Patent Office**
**Office européen des brevets**

(11) **EP 2 083 198 A2**

(12) **EUROPÄISCHE PATENTANMELDUNG**

(43) Veröffentlichungstag:
**29.07.2009 Patentblatt 2009/31**

(51) Int Cl.:
***F16H 61/04*** *(2006.01)*     *F16H 61/688* *(2006.01)*

(21) Anmeldenummer: **08018976.4**

(22) Anmeldetag: **30.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **26.01.2008   DE 102008006194**

(71) Anmelder: **Dr.Ing. H.C. F. Porsche Aktiengesellschaft**
**70435 Stuttgart (DE)**

(72) Erfinder:
• **Hoffmeister, Jan-Peter**
  **71229 Leonberg (DE)**
• **Baur, Peter**
  **71297 Moensheim (DE)**

(54) **Verfahren und Steuergerät zur Steuerung eines Triebstrangs, der ein Doppelkupplungsgetriebe aufweist**

(57)     Vorgestellt wird ein Verfahren zur Steuerung des Triebstrangs (10) eines Kraftfahrzeugs, der ein Doppelkupplungsgetriebe (14) mit einem ersten Teilgetriebe (TG1) und einer ersten Kupplung (K1) sowie mit einem zweiten Teilgetriebe (TG2) und einer zweiten Kupplung (K2) aufweist, wobei der Triebstrang (10) mit zeitgleich im ersten Teilgetriebe (TG1) eingelegten Gang und im zweiten Teilgetriebe (TG2) eingelegten Gang und zeitgleich im Schlupf betriebener erster Kupplung (K1) und zweiter Kupplung (K2) betrieben wird. Das Verfahren zeichnet sich dadurch aus, dass die erste Kupplung (K1) und die zweite Kupplung (K2) in aufeinander abgestimmter Weise so angesteuert werden, dass eine Drehzahl (nMot) des Verbrennungsmotors (12) einen vorbestimmten Wert annimmt oder beibehält.

Fig.5

**Beschreibung**

Die Erfindung betrifft ein Verfahren zur Steuerung des Triebstrangs eines Kraftfahrzeugs, der ein Doppelkupplungsgetriebe mit einem ersten Teilgetriebe und einer ersten Kupplung sowie mit einem zweiten Teilgetriebe und einer zweiten Kupplung aufweist, wobei der Triebstrang mit zeitgleich im ersten Teilgetriebe eingelegten Gang und im zweiten Teilgetriebe eingelegten Gang und zeitgleich im Schlupf betriebener erster Kupplung und zweiter Kupplung betrieben wird. Die Erfindung betrifft ferner ein zur Durchführung des Verfahrens eingerichtetes Steuergerät.

Ein solches Verfahren und ein solches Steuergerät ist jeweils aus in Serie gefertigten Kraftfahrzeugen bekannt. Die Aufteilung des Doppelkupplungsgetriebe in ein erstes und in zweites Teilgetriebe, die unabhängig voneinander über die erste, respektive zweite Kupplung mit dem Antriebsmotor des Triebstrangs verbunden werden können, erlaubt ein zugkraftunterbrechungsfreies Wechseln der Übersetzungen. Beim Anfahren treibt der Antriebsmotor das Kraftfahrzeug in der Regel zunächst über die erste Kupplung und das erste Teilgetriebe an. Dabei kann bei offener (zweiter) Kupplung des zweiten Teilgetriebes im zweiten Teilgetriebe bereits der zweite Gang eingelegt werden. Beim Überleiten der Drehmomentübertragung von einer Übertragung über das erste Teilgetriebe zu einer Übertragung über das zweite Teilgetriebe werden beide Kupplungen kurzzeitig gleichzeitig im Schlupf betrieben, wobei die Drehmomentübertragung über die erste Kupplung abnimmt und über die zweite Kupplung zunimmt. Die in dieser Überleitungsphase gleichzeitig über beide Kupplungen übertragenen Drehmomente werden im Doppelkupplungsgetriebe addiert. Nach erfolgter Überleitung ist die zweite Kupplung komplett geschlossen. Nach Abschluss der Überleitung wird das Kraftfahrzeug im zweiten Gang weiter beschleunigt. Aufgrund des Wechsels der Übersetzung ändert sich der Zusammenhang zwischen Motordrehzahl und Fahrgeschwindigkeit. Das Öffnen und Schließen der Kupplungen sowie die sich dabei ergebenden Drehzahländerungen regen Schwingungen des Triebstrangs an.

Beim Fahren mit niedrigen Geschwindigkeiten im untersten Teillastbereich, also mit nur sehr geringer Drehmomentanforderung durch den Fahrer, spielt der Komfort eine größere Rolle als andere Eigenschaften, zum Beispiel als ein sportliches Fahrverhalten. Besonders im Schritttempo-Bereich zwischen etwa 5 und 15 km/h werden Längsschwingungen des Fahrzeugs, die durch die genannten Schaltungen verursacht werden, oder spürbare Rucke, die durch Lastwechsel verursacht werden, oder Vibrationen, die durch Ladungswechsel bei der Füllung von Brennräumen des Antriebsmotors verursacht werden, als störend empfunden.

So führen zum Beispiel Schub- und Teillast-Schaltungen beim Ausrollen (Anhalten) zu unkomfortablen Längsschwingungen und Zug / Schub-Lastwechseln. Auch ein spätes Öffnen der Kupplung des ersten Ganges kurz vor dem Anhalten führt durch die resultierende Antriebsstrang-Entlastung zu einer spürbaren Veränderung der Längsverzögerung. Gegebenenfalls werden Rückschaltungen sogar mit Zwischengas ausgeführt und erhöhen den Kraftstoffverbrauch.

Beim Konstantfahren mit sehr niedrigen Geschwindigkeiten von zum Beispiel 5 km/h- 15 km/h, wie sie typischerweise im Stop and go - Betrieb auftreten, führen Schaltungen zu Geschwindigkeitsänderungen und unkomfortablen Längsschwingungen, die der Fahrer durch Fahrpedalkorrekturen ausgleichen muss. Ferner sind während der Schaltungen durch Massenträgheitseffekte, Momentenänderungen und Übersetzungsänderungen hervorgerufene Ruckeffekte und / oder Beschleunigungseffekte zu spüren. Durch den Drehzahleinfluss verändert sich sowohl das Motormoment, als auch die Motorleistung, wodurch der Fahrer gezwungen wird, den Fahrpedalwinkel zu korrigieren. Häufige Hoch- und Rückschaltungen sind auf Grund der niedrigen Hysterese (Geschwindigkeitsabstand) unerwünscht und doch wahrscheinlich.

Vor diesem Hintergrund besteht die Aufgabe der Erfindung in der Angabe eines Verfahrens und eines Steuergerätes, mit denen der Fahrkomfort unter den genannten Bedingungen verbessert wird.

Diese Aufgabe wird mit einem Verfahren mit den Merkmalen des Anspruchs 1 sowie mit einem Steuergerät mit den Merkmalen des Anspruchs 9 gelöst.

Dabei wird jeweils die erste und die zweite Kupplung in aufeinander abgestimmter Weise so angesteuert, dass eine Drehzahl des Verbrennungsmotors einen vorbestimmten Wert annimmt oder beibehält. Mit anderen Worten: Anstelle die eine Kupplung im aktuellen Gang komplett zu schließen und die andere Kupplung komplett zu öffnen, werden beide Kupplungen im Schlupf, bevorzugt im geregelten Schlupf, betrieben, um ein erwünschtes komfortables Fahrverhalten zu erzielen.

Durch diese Merkmale wird erreicht, dass sich die Motordrehzahl bei langsamer Fahrt einer Solldrehzahl folgend sanft und ohne ausgeprägte lokale Drehzahlminima und Drehzahlmaxima weich einer Zieldrehzahl angleicht. Die Zieldrehzahl kann beim Anhalten zum Beispiel die Leerlaufdrehzahl sein. Bei permanent geschlossener Kupplung, wie es beim Stand der Technik üblich ist, könnte die Motordrehzahl dagegen speziell bei langsamer Fahrt im 1. und 2. Gang unter eine Zieldrehzahl absinken. Um das zu vermeiden, ist es bekannt, eine Hochschaltung später und die Rückschaltung, zum Beispiel in den ersten Gang, früher erfolgen zu lassen, was den Kraftstoffverbrauch erhöht und mit Komforteinbußen verbunden ist. Die bei der Erfindung erzielten niedrigen Motordrehzahlen von zum Beispiel 700 1/min bis 1200 1/min helfen dagegen, den Kraftstoffverbrauch zu senken.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1    das technische Umfeld der Erfindung;
Fig. 2    Verläufe verschiedener Betriebsparameter des Triebstrangs aus der Figur 1 bei einer dem Stand der Technik entsprechenden Steuerung des Triebstrangs über der Zeit beim Anhalten des Fahrzeugs;
Fig. 3    ein Flussdiagramm als Ausführungsbeispiel eines erfindungsgemäßen Verfahrens;
Fig. 4    einen geglätteten Verlauf der Drehzahl des Verbrennungsmotors, wie er sich beim Gegenstand der hier vorliegenden Erfindung beim Anhalten des Fahrzeugs einstellt; und
Fig. 5    einen Verlauf der Motordrehzahl bei einem Ausführungsbeispiel der Erfindung in einem Übersetzungskennfeld, in dem lineare Abhängigkeiten der Motordrehzahl nMot von der Fahrgeschwindigkeit v für die verschiedenen Gänge des Doppelkupplungsgetriebes aufgetragen sind.

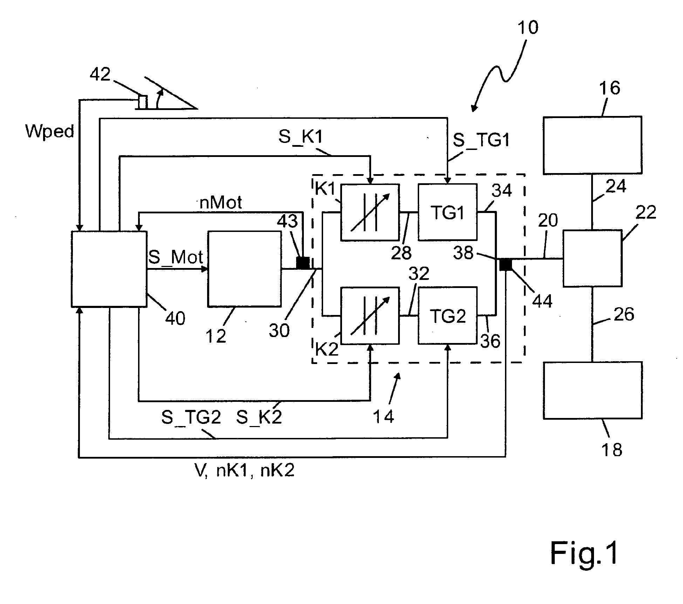

Im Einzelnen zeigt die Fig. 1 einen Triebstrang 10 eines Kraftfahrzeugs. Der Triebstrang 10 weist einen Verbrennungsmotor 12, ein Doppelkupplungsgetriebe 14 sowie weitere Getriebe und/oder Wellen zur Übertragung von Leistungen zwischen Antriebsrädern 16, 18 des Kraftfahrzeugs und dem Verbrennungsmotor 12 auf. In der Figur 1 dient eine Welle 20 zur Leistungsübertragung zwischen dem Doppelkupplungsgetriebe 14 und einem Differentialgetriebe 22, während Antriebswellen 24, 26 Leistungen zwischen dem Differentialgetriebe 22 und den beiden Antriebsrädern 16, 18 übertragen. Eine solche Anordnung ist für ein Kraftfahrzeug mit Frontmotor und Heckantrieb typisch. Die Erfindung ist jedoch nicht auf eine Verwendung bei dem dargestellten Triebstrang 10 beschränkt und kann auch bei Triebsträngen mit Frontantrieb, Allradantrieb oder Heckantrieben mit Transaxle-Bauweise verwendet werden.

Das Doppelkupplungsgetriebe 14 weist ein erstes Teilgetriebe TG1 und ein zweites Teilgetriebe TG2 auf. Ein Drehmomentfluss zwischen einer Eingangswelle 28 des ersten Teilgetriebes TG1 und einer Kurbelwelle 30 des Verbrennungsmotors 12 erfolgt über eine erste steuerbare Kupplung K1. Ein Drehmomentfluss zwischen einer Eingangswelle 32 des zweiten Teilgetriebes TG2 und der Kurbelwelle 30 des Verbrennungsmotors 12 erfolgt über eine zweite steuerbare Kupplung K2. Das erste Teilgetriebe TG1 stellt in einer Ausgestaltung Übersetzungsstufen (Gänge) mit ungeradzahliger Nummerierung wie den ersten Gang, den dritten Gang und so weiter bereit, während das zweite Teilgetriebe TG2 die Übersetzungsstufen (Gänge) mit geradzahliger Nummerierung wie den zweiten Gang, den vierten Gang und so weiter bereitstellt.

Sowohl eine Hauptwelle 34 des ersten Teilgetriebes TG1 als auch eine Hauptwelle 36 des zweiten Teilgetriebes TG2 ist drehfest mit der Welle 20 verbunden. Die Wellen 34 und 36 drehen sich daher mit der gleichen Drehzahl, die bei Geradeausfahrt des Kraftfahrzeugs ohne Schlupf an den Antriebsrädern 16, 18 linear von der Drehzahl der Antriebsräder 16, 18 und damit linear von der Fahrgeschwindigkeit v des Fahrzeugs abhängt. In der schematischen Darstellung der Figur 1 addieren sich die Drehmomente der Wellen 34 und 36 in der Verknüpfung 38 zum in der Welle 20 wirksamen Drehmoment.

Ein Steuergerät 40 steuert in der Ausgestaltung der Figur 1 den gesamten Triebstrang 10, also den Verbrennungsmotor 12 und das Doppelkupplungsgetriebe 14. Es versteht sich, dass anstelle eines einzigen Steuergerätes 40 auch ein Verbund aus mehreren Steuergeräten verwendet werden kann, die ihrerseits von einem zentralen Steuergerät koordiniert werden oder die über ein Bussystem miteinander kommunizieren, um ihre einzelnen Stelleingriffe in den Triebstrang 10 zu koordinieren.

Zur Steuerung des Triebstranges 10 verarbeitet das Steuergerät 40 Signale einer Vielzahl von Sensoren, in denen sich Betriebsparameter des Triebstrangs 10 abbilden. In Verbindung mit der Erfindung sind dabei insbesondere die folgenden Betriebsparameter von Bedeutung: Ein Fahrpedalwinkel Wped, der von einem Fahrerwunschgeber 42 bereitgestellt wird und in dem sich eine Drehmomentanforderung durch den Fahrer abbildet, eine Drehzahl nMot der Kurbelwelle 30 des Verbrennungsmotors 12, die von einem Drehzahlsensor 43 erfasst wird und eine Fahrgeschwindigkeit v, die von einem Fahrgeschwindigkeitsgeber 44 erfasst wird. Der Fahrgeschwindigkeitsgeber 44 ist in einer Ausgestaltung als Drehzahlsensor realisiert, der eine Drehzahl am Ausgang des Doppelkupplungsgetriebes 14, also eine Drehzahl von einer der Wellen 34, 36 oder 20 erfasst. Alternativ oder ergänzend wird ein Drehzahlsignal an einem oder mehreren der Räder 16, 18 erfasst, zum Beispiel mit Hilfe der Sensorik eines Anti-Blockier-Systems.

Bei Kenntnis der in den Teilgetrieben TG1 und TG2 jeweils eingestellten Übersetzungen ergibt sich die Drehzahl nK1 der Eingangswelle 28 des ersten Teilgetriebes TG1 und die Drehzahl nK2 der Eingangswelle 32 des zweiten Teilgetriebes TG2 jeweils als lineare Funktion der Fahrgeschwindigkeit v.

In Abhängigkeit von diesen Betriebsparametern des Triebstrangs 10 und gegebenenfalls in Abhängigkeit von weiteren Betriebsparametern, insbesondere in Abhängigkeit von Betriebsparametern des Verbrennungsmotors 12, bildet das Steuergerät 40 Stellsignale S_Mot, S_K1, S_K2, S_TG1 und S_TG2. Dabei dient das Stellsignal S_Mot zur Einstellung eines Drehmomentes des Verbrennungsmotors 12. Das Stellsignal S_TG1 dient zum Einlegen eines Ganges im ersten Teilgetriebe TG1 und damit zum Einstellen seiner Übersetzung. Das Stellsignal S_TG2 dient analog zum Einstellen einer Übersetzung im zweiten Teilgetriebe TG2. Mit dem Stellsignal S_K1 wird der Drehmomentfluss über die erste Kupplung K1 gesteuert. Analog wird der Drehmomentfluss über die zweite Kupplung K2 mit dem Stellsignal S_K2 gesteuert.

Der Zusammenhang der Ansteuersignale S_K1, S_K2 mit dem jeweils über jede der beiden Kupplungen K1, K2 bei bestimmten Drehzahlunterschieden übertragenen Drehmoment ist bevorzugt in Form von Kennlinien oder Kennfeldern im Steuergerät 40 abgelegt. Dies ist Stand der Technik. Die Drehzahlunterschiede sind im Steuergerät 40 durch Auswertung der Drehzahlwerte nMot und nK1, nK2 ebenfalls bekannt. Bekannt ist auch das Motormoment, das vom Steuergerät 40 aus Betriebskenngrößen des Verbrennungsmotors 12 laufend berechnet wird, da moderne Motorsteuerungen sämtliche Stellgrößen auf der Basis von Drehmomentanforderungen bestimmen, die zum Beispiel in Abhängigkeit von dem Fahrpedalwinkel Wped berechnet werden.

Das Steuergerät 40 ermittelt aus dem Vorzeichen des Drehzahlunterschiedes an jeder der Kupplung K1, K2 die Richtung des jeweils übertragenen Drehmoments und aus dem Drehzahlunterschied und dem sich letztlich im Anpressdruck der Kupplungsreibflächen abbildenden Ansteuersignal S_K1, S_K2 den Wert des über jede der beiden Kupplungen K1, K2 übertragenen Drehmoments.

Daher kann das Steuergerät 40 den Drehmomentfluss über beide Kupplungen K1, K2 in gesteuerter Weise verteilen und damit Richtung und Ausmaß des resultierenden gesamten Drehmomentflusses steuern, um die Motordrehzahl nMot durch aufeinander abgestimmtes Ansteuern beider Kupplungen K1, K2 auf einen Sollwert oder Sollwertverlauf über der Zeit oder über der Fahrgeschwindigkeit v einzustellen.

Im Übrigen ist das Steuergerät 40 oder ein entsprechender Verbund von Steuergeräten dazu eingerichtet, insbesondere dazu programmiert, das erfindungsgemäße Verfahren oder eine seiner Ausgestaltungen durchzuführen. Dabei wird unter einer Durchführung eine Steuerung der hier beschriebenen Verfahrensabläufe verstanden.

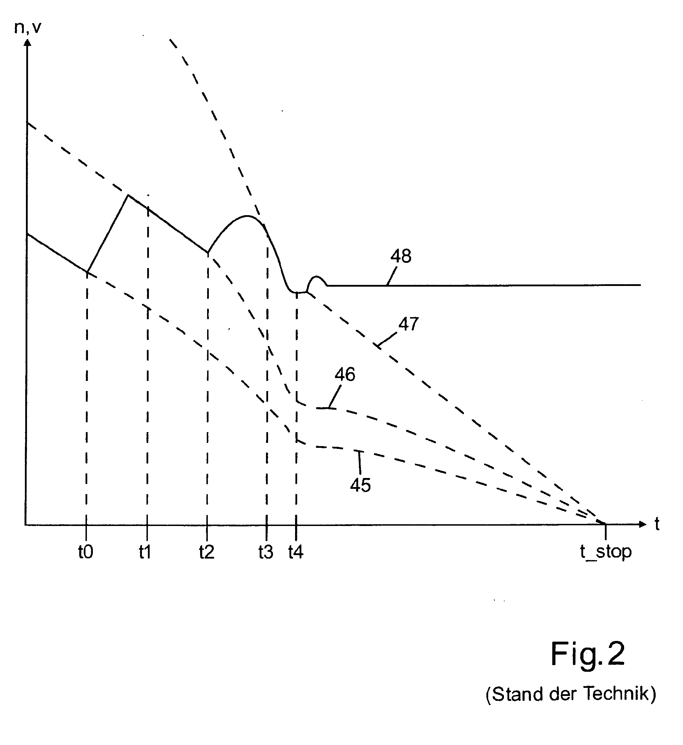

Figur 2 veranschaulicht die Entstehung der eingangs genannten, störenden Rucke und/oder Längsschwingungen. Dazu zeigt Figur 2 Verläufe verschiedener Betriebsparameter des Triebstrangs 10 aus der Figur 1 bei einer dem Stand der Technik entsprechenden Steuerung des Triebstrangs 10 über der Zeit t beim Anhalten des Fahrzeugs. Die gestrichelten Linien 45, 46 und 47 repräsentieren dabei in dieser Reihenfolge die Drehzahlen nK1_Gang 3 der Eingangswelle 28 des Teilgetriebes TG1 im dritten Gang, die Drehzahl nK2_Gang 2 der Eingangswelle 32 des zweiten Teilgetriebes TG2 im zweiten Gang und der Drehzahl nK1_Gang 1 der Eingangswelle 28 des ersten Teilgetriebes TG1 im ersten Gang. Die durchgezogene Linie 48 repräsentiert den zugehörigen zeitlichen Verlauf der Drehzahl nMot. Solange kein Schlupf an den Rädern 16, 18 auftritt, ist die Fahrgeschwindigkeit v jeweils mit einem von der jeweiligen Übersetzung abhängigen Faktor proportional zur Fahrgeschwindigkeit v. Jede der drei gestrichelten Linien 45, 46 und 47 repräsentiert damit zwar nicht quantitativ, aber qualitativ, den Verlauf der Fahrgeschwindigkeit v bis zum Stillstand des Kraftfahrzeugs zum Zeitpunkt t_stop.

Bis zum Zeitpunkt t0 verzögert das Fahrzeug im dritten Gang bei geschlossener Kupplung K1. Die Kupplung K2 ist offen. Die Motordrehzahl nMot entspricht dort der Drehzahl nK1_Gang 3. Parallel wird bei offener Kupplung K2 der zweite Gang im zweiten Teilgetriebe TG2 eingelegt. Zwischen den Zeitpunkten t0 und t1 wird die erste Kupplung K1 zunehmend geöffnet und die Kupplung K2 zunehmend geschlossen, bis zum Zeitpunkt t1 die Kupplung K1 ganz offen und die Kupplung K2 ganz geschlossen ist. Die Drehzahl nMot steigt entsprechend bei schlupfenden Kupplungen K1, K2 bis zum Zeitpunkt t1 an, um anschließend bei geschlossener Kupplung K2 und offener Kupplung K1 bei weiterer Verzögerung des Fahrzeugs wieder abzufallen.

Bei offener Kupplung K1 wird nach dem Zeitpunkt t1 der erste Gang im ersten Teilgetriebe TG1 eingelegt. Zwischen den Zeitpunkten t2 und t3 wird die zweite Kupplung K2 zunehmend geöffnet und die erste Kupplung K1 zunehmend geschlossen. Dadurch steigt die Drehzahl nMot des Verbrennungsmotors 12 auf einen durch die Kurve 47 vorgegebenen Wert an. Anschließend fällt sie bei weiterer Verzögerung des Fahrzeugs wieder ab, bis zum Zeitpunkt t4 der Wert der Leerlaufdrehzahl erreicht wird.

Um zu verhindern, dass die Drehzahl nMot die Leerlaufdrehzahl des Verbrennungsmotors unterschreitet, wird die Kupplung K1 zum Zeitpunkt t4 geöffnet. Anschließend wird die Drehzahl nMot durch eine bekannte Leerlaufdrehzahlregelung auf einem konstanten Wert gehalten. Der vor dem Zeitpunkt t4 im Verlauf 48 der Drehzahl nMot sichtbare Wechsel zwischen lokalen Drehzahlminima und lokalen Drehzahlmaxima entsteht dadurch, dass die Drehzahl des Verbrennungsmotors 12 zwischen den Zeitpunkten t0 und t1 sowie t2 und t3 jeweils auf Kosten der kinetischen Energie des Fahrzeugs angehoben wird. Die Bremswirkung des Verbrennungsmotors 12 variiert deshalb und regt die Schwingungen im Triebstrang 10 an, die sich in den unerwünschten Längsschwingungen des Fahrzeugs abbilden. Analog stellt der Ruck beim Öffnen der Kupplung K1 zum Zeitpunkt t4 eine Störung dar, die Schwingungen anregen kann oder als Ruck spürbar ist.

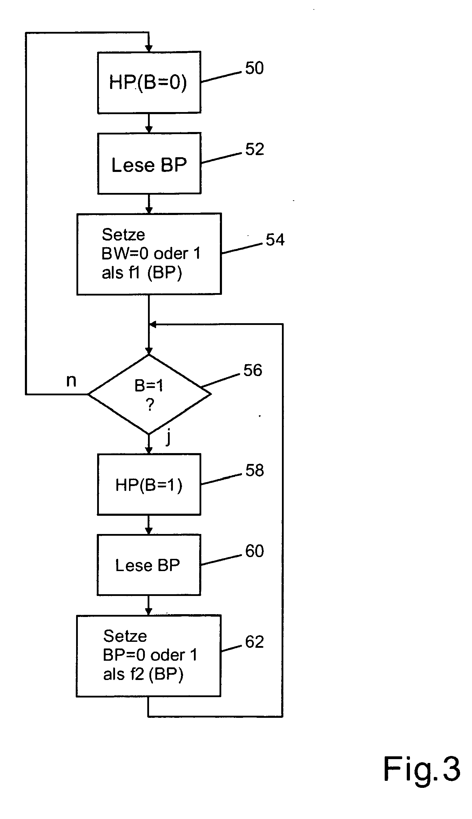

Fig. 3 zeigt ein Flussdiagramm als Ausführungsbeispiel eines erfindungsgemäßen Verfahrens. Schritt 50 repräsentiert ein Hauptprogramm HP(B = 0) zur Steuerung des Triebstrangs 10 für den Fall, dass ein Parameter B den Wert Null besitzt. In diesem Fall (B = 0) wird der Triebstrang 10 in bekannter Weise gesteuert. Dann stellt sich zum Beispiel der in der Fig. 2 dargestellte Verlauf der Motordrehzahl nMot mit den erläuterten Maxima und Minima ein.

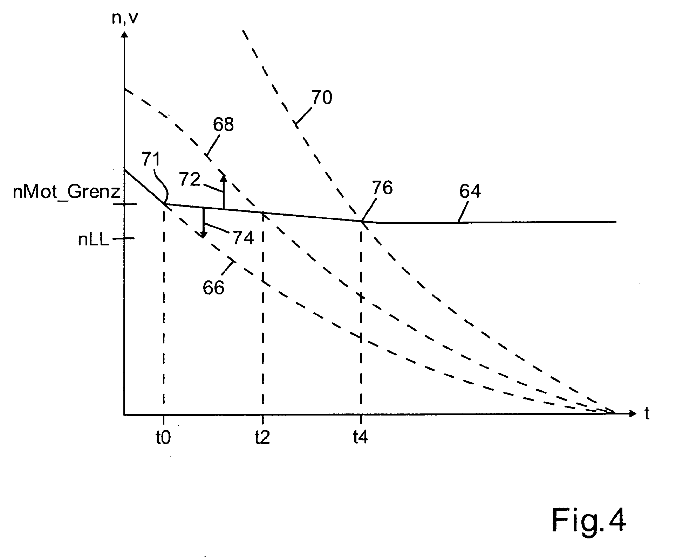

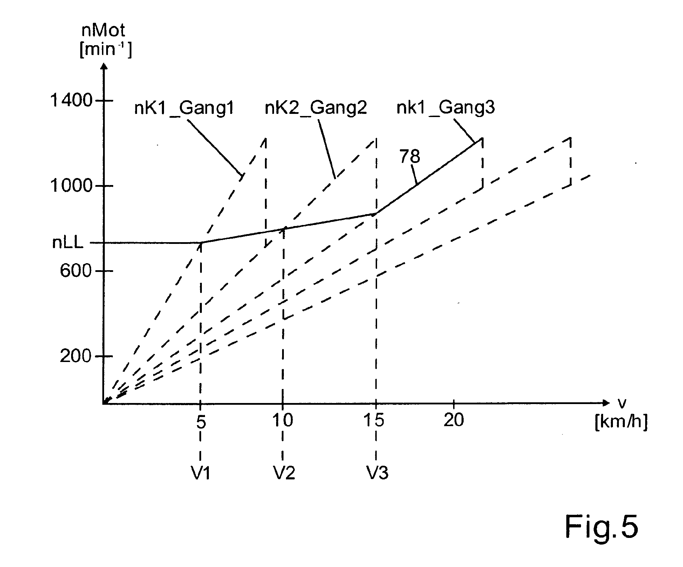

Aus diesem Hauptprogramm HP(B = 0) heraus wird wiederholt ein Schritt 52 erreicht, in dem Betriebsparameter BP des Triebstrangs 10 eingelesen werden, die für eine Aktivierung der hier vorgestellten Komfort-orientierten Steuerung des Triebstrangs ausgewertet werden. Einzelheiten der Komfort-orientierten Steuerung werden weiter unten unter Bezug auf die Figuren 4 und 5 näher erläutert.

Die Auswertung wird in der Fig. 3 durch eine Funktion f1(BP) repräsentiert, die einen Einstieg in die Komfort-orientierte Steuerung charakterisiert und in einem Schritt 54 durchgeführt wird. Weiter unten wird analog noch eine Funktion f2 verwendet, die einen Ausstieg aus der Komfort-orientierten Steuerung charakterisiert, so dass eine Hysterese zwischen einem Einstieg und einem Ausstieg in die Komfort-orientierte Steuerung möglich ist.

Wenn die Auswertung im Schritt 54 ergibt, dass die Komfort-orientierte Steuerung nicht durchgeführt werden soll, wird B auf den Wert B = 0 gesetzt. Dann wird die Abfrage im anschließenden Schritt 56 verneint wird und das Hauptprogramm HP(B = 0) im Schritt 50 weiter abgearbeitet. Das bedeutet, dass der Triebstrang 10 in der aus dem Stand der Technik bekannten Weise (vergleiche Fig. 2) gesteuert wird.

Ergibt die Auswertung im Schritt 54 dagegen, dass eine Komfort-orientierte Steuerung der Kupplungen K1, K2 erfolgen soll, wird B auf den Wert B = 1 gesetzt. B wird in einer Ausgestaltung auf 1 gesetzt, wenn das Fahrzeug mit geringer Drehmomentanforderung durch den Fahrer, also mit geringem Pedalwinkel Wped und niedriger Geschwindigkeit in einem niedrigen Gang, zum Beispiel im ersten oder zweiten Gang, bewegt wird. In einer Ausgestaltung wird dazu überprüft, ob der Fahrpedalwinkel Wped kleiner als ein unterer Schwellenwert Wped_low und gleichzeitig sowohl die Motordrehzahl nMot kleiner als ein Schwellenwert nMot_Grenz als auch die Fahrgeschwindigkeit v kleiner als ein Schwellenwert v_Grenz ist. In einer weiteren Ausgestaltung ist der Schwellenwert nMot_Grenz und/oder der Schwellenwert v_Grenz von einem Modulationsfaktor MF abhängig, in dem sich die Fahrbahnneigung in Fahrtrichtung abbildet und der zum Beispiel von einem Neigungssensor bereitgestellt wird:

$$B = 1 \text{ wenn:}$$

$$Wped < Wped\_Grenz \text{ und}$$

$$Gang = Gang\ 1 \text{ oder } Gang\ 2, \text{ und}$$

$$nMot < nMot\_Grenz(MF) \text{ und } v < v\_Grenz(MF).$$

Typische Werte sind, ohne dass die Erfindung auf diese Werte beschränkt sein soll: Wped_Grenz < 10 % des maximalen Pedalwinkels, 500 $min^{-1}$ < Leerlaufdrehzahl < nMot_Grenz < (900 $min^{-1}$ in der Ebene, 1200 $min^{-1}$ am Berg).

Wenn diese Bedingungen erfüllt sind, wird die Abfrage im anschließenden Schritt 56 bejaht und das Programm verzweigt in den Schritt 58, in dem ein modifiziertes Hauptprogramm HP(B = 1) zur Steuerung des Triebstrangs 10 in Komfort-orientierter Weise abgearbeitet wird.

Aus dem Schritt 58 wird wiederholt der Schritt 60 erreicht, in dem Betriebsparameter BP des Triebstrangs 10 eingelesen werden, die für eine Deaktivierung der hier vorgestellten Komfort-orientierten Steuerung des Triebstrangs ausgewertet werden. Die Auswertung wird in der Fig. 3 durch die Funktion f2(BP) repräsentiert, die einen Ausstieg aus der Komfort-orientierten Steuerung charakterisiert. Wenn die Auswertung der Funktion f2(BP) im Schritt 62 ergibt, dass die Komfort-orientierte Steuerung nicht durchgeführt werden soll, wird B wieder auf den Wert B = 0 gesetzt und das Programm verzweigt vor den Abfrageschritt 56 zurück, der entweder eine normale, nicht Komfort-orientierte Steuerung durch HP(B = 0) im Schritt 50 oder einer Komfort-orientierte Steuerung HP(B =1) im Schritt 58 auswählt.

In einer Ausgestaltung wird B im Schritt 62 auf 0 gesetzt, wenn die Kupplung K1 im ersten Gang oder die Kupplung K2 im zweiten Gang nicht mehr schlupft, also keine Differenz zwischen Motordrehzahl nMot und der Drehzahl der Eingangswelle des zugehörigen Teilgetriebes mehr auftritt, und gleichzeitig die Fahrzeuggeschwindigkeit v einen Schwellenwert v_Grenz überschreitet oder oberhalb dieses Schwellenwerts liegt. Der Schwellenwert ist bevorzugt kleiner als 20 km /h und ist in einer Ausgestaltung von dem Modulationsfaktor MF so abhängig, dass sich am Berg ein höherer Grenzwert ergibt als in der Ebene.

Alternativ wird B auf 0 gesetzt, wenn die Drehmomentanforderung Wped durch den Fahrer einen Schwellenwert Wped_Grenz_Zug überschreitet und die zu schließende Kupplung nicht mehr schlupft. Auch hier sieht eine Ausgestaltung vor, dass der Schwellenwert Wped_Grenz_Zug von der Fahrgeschwindigkeit v und dem Modulationsfaktor so abhängig ist, dass er mit zunehmenden Werten von v und/oder MF ebenfalls zunimmt. Ohne Beschränkung der Allgemeinheit liegen Werte für Wped_Grenz_Zug bevorzugt zwischen 50 % und 70 % des maximalen Pedalwinkels.

Eine weitere Ausgestaltung sieht vor, dass B auf 0 gesetzt wird, wenn der Fahrer manuell vom zweiten Gang in den ersten Gang zurückschaltet. Dann wird die erste Kupplung K1 geschlossen. Wenn sie nicht mehr schlupft, und die Motordrehzahl nMot einen gegebenenfalls noch um einen Hysterese-Offset vergrößerten Schwellenwert nMot_ Grenz (v, MF) überschreitet, wird erfolgt das Rücksetzen von B = 1 auf B = 0. Ohne Beschränkung der Allgemeinheit liegt der Hysterese-Offset in der Größenordnung von 50 min-1.

Figur 4 zeigt einen geglätteten Verlauf 64 der Drehzahl nMot des Verbrennungsmotors 12, wie er sich beim Gegenstand der hier vorliegenden Erfindung beim Anhalten des Fahrzeugs unter der Bedingung B = 1, also bei aktivierter Komfort-Orientierung der Triebstrangsteuerung, einstellt. Vor dem Zeitpunkt t0 verzögert das Fahrzeug im dritten Gang. Die Kupplung K1 ist geschlossen und die Kupplung K2 ist offen, wobei im zweiten Teilgetriebe TG2 bereits der zweite Gang eingelegt ist. Dabei verringert sich die Drehzahl nMot proportional zur Verringerung der Fahrgeschwindigkeit v, bis nMot zum Zeitpunkt t0 einen Schwellenwert nMot_Grenz erreicht. Auch hier gilt, dass die Fahrgeschwindigkeit v in zugehöriger geschlossener Kupplung proportional zur Drehzahl nMot ist, wobei der Proportionalitätsfaktor von der Übersetzung und damit vom eingelegten Gang abhängig ist. Die gestrichelten Kurven 66, 68 und 70 repräsentieren dabei in dieser Reihenfolge die Drehzahlen nK1_Gang 3 der Eingangswelle 28 des Teilgetriebes TG1 im dritten Gang, die Drehzahl nK2_Gang 2 der Eingangswelle 32 des zweiten Teilgetriebes TG2 im zweiten Gang und der Drehzahl nK1_Gang 1 der Eingangswelle 28 des ersten Teilgetriebes TG1 im ersten Gang. Durch eine entsprechende Skalierung von Drehzahlwerten und Fahrgeschwindigkeitswerten auf der Ordinate wurde der zeitliche Verlauf der Fahrgeschwindigkeit v mit dem Verlauf der Drehzahl nMot im dritten Gang zur Deckung gebracht. Die Kurve 66 repräsentiert damit zugleich Drehzahlwerte und Fahrgeschwindigkeitswerte. Analog repräsentiert der Schwellenwert nMot_Grenz im Punkt 71 damit gleichzeitig einen Drehzahlschwellenwert und einen (unteren) Geschwindigkeitsschwellenwert v_Grenz.

Ab dem Zeitpunkt t0 des Erreichens des Schwellenwertes nMot_Grenz wird die erste Kupplung K1 sukzessive geöffnet und die zweite Kupplung K2 sukzessive geschlossen. Im Unterschied zum Stand der Technik erfolgt das Öffnen der Kupplung K1 und das Schließen der Kupplung K2 in aufeinander abgestimmter Weise so, dass sich die Motordrehzahl nMot monoton fallend der Leerlaufdrehzahl nLL des Verbrennungsmotors 12 als Zieldrehzahl annähert. Dabei wird die Drehzahl nMot alternativ oder ergänzend zu Eingriffen in die Steuerung des Verbrennungsmotors 12 durch aufeinander abgestimmte Steuerung der Drehmomentflüsse über beide Kupplungen K1, K2 eingestellt. Bis zum Zeitpunkt t0 war die Kupplung K2 offen und übertrug damit kein Drehmoment, während die Kupplung K1 bei verzögerndem Fahrzeug im Schiebebetrieb ein Schiebemoment überträgt, mit dem der Verbrennungsmotor 12 durch die kinetische Energie des verzögernden Fahrzeuges angetrieben wird.

Das allmähliche Öffnen der Kupplung K1 ab dem Zeitpunkt t0 erlaubt einen Schlupf an der Kupplung K1. Das parallel erfolgende allmählich schließende Kupplung K2 verlagert die Übertragung des den Verbrennungsmotor 12 antreibenden Schiebemoments auf die Kupplung K2. Im Ergebnis führt das dazu, dass die Motordrehzahl nMot nach dem Zeitpunkt t0 zwischen Werten auf der Kurve 68 des zweiten Ganges und der Kurve 66 des dritten Ganges liegt. Die Motordrehzahl nMot ist für den dritten Gang zu hoch und für den zweiten Gang zu niedrig. Das heißt, dass die Motordrehzahl nMot durch schließendes Ansteuern der Kupplung K1 des dritten Gangs verringert und durch schließendes Ansteuern der Kupplung K2 des zweiten Gangs erhöht werden kann.

Durch schließende Ansteuerung von jeweils einer der beiden Kupplungen K1, K2 kann die Drehzahl nMot damit erhöht oder verringert werden. Die Ansteuerung erfolgt dabei in einer Ausgestaltung bevorzugt in geregelter Weise. Dazu wird der Istwert der Motordrehzahl nMot mit einem Sollwert verglichen und aus der Regelabweichung werden Stellgrößen S_K1 und S_K2 gebildet, mit denen die Drehmomentübertragung über die Kupplungen K1 und K2 individuell gesteuert wird.

In der Figur 4 wird die erhöhende Wirkung des Schließens der Kupplung K2 durch den Pfeil 72 und die verringernde Wirkung des Schließens der Kupplung K1 durch den Pfeil 74 veranschaulicht. In einer bevorzugten Ausgestaltung werden beide Kupplungen K1, K2 ab dem Zeitpunkt t0 so gesteuert, dass die Drehzahl nMot des Verbrennungsmotors 12 durch geeignetes Ansteuern beider Kupplungen K1, K2 monoton fallend und damit ohne Auftreten lokaler Extrema in die Zieldrehzahl überführt wird.

Zum Zeitpunkt t2 durchläuft die Drehzahl nMot die Kurve 68. Zu diesem Zeitpunkt überträgt die kurzzeitig geschlossene Kupplung K2 vorübergehend das ganze Schiebemoment, während die Kupplung K1 vorübergehend ganz geöffnet wird. Bei geöffneter Kupplung K1 wird der erste Gang eingelegt. Ab jetzt wirkt ein Schließen der Kupplung K1 nMot- erhöhend und ein Geschlossenhalten der Kupplung K2 nMotverringernd. Analog zum Vorgehen zwischen den Zeitpunkten t0 und t2 wird im Folgenden die Motordrehzahl nMot durch entsprechendes Ansteuern der Kupplungen K1, K2 monoton fallend in die Zieldrehzahl überführt.

Die Zieldrehzahl in Form der Leerlaufdrehzahl nLL wird zum Zeitpunkt t4 erreicht, in dem die Kurve 70 den Wert der Zieldrehzahl schneidet. Um zu verhindern, dass die Motordrehzahl nMot unter die Zieldrehzahl sinkt, wird nicht nur die zweite Kupplung K2, sondern auch die erste Kupplung K1 bei der Annäherung an den Schnittpunkt 76 zunehmend geöffnet.

Fig. 5 zeigt ein Übersetzungskennfeld, in dem lineare Abhängigkeiten der Motordrehzahl nMot von der Fahrgeschwindigkeit v für die verschiedenen Gänge des Doppelkupplungsgetriebes 14 aufgetragen sind. Der Verlauf 78 repräsentiert die Drehzahl nMot des Verbrennungsmotors 12, die zunächst seiner Leerlaufdrehzahl nLL entspricht. Für ein Komfort-orientiertes Anfahren werden bei kleinen Geschwindigkeiten v < v1 zunächst beide Kupplungen K1, K2, die bei v = 0 offen sind, schließend angesteuert. Beide Kupplungen K1, K2 übertragen Zugmomente des Verbrennungsmotors, die das Fahrzeug in Bewegung setzen. Die Motordrehzahl nMot wird in dieser Phase durch Eingriffe S_mot in die Steuerung des Verbrennungsmotors auf einem Sollwert gehalten, der in einer Ausgestaltung der Leerlaufdrehzahl nLL entspricht oder geringfügig höher liegt.

Beim Erreichen der Geschwindigkeit v1 entspricht die Drehzahl nMot der Drehzahl nK1_Gang 1 der Eingangswelle 28 des ersten Teilgetriebes TG1. Bei dem angestrebten, von der Fahrzeuggeschwindigkeit v abhängigen Verlauf der Motordrehzahl nMot kann die erste Kupplung K1 bei eingelegtem ersten Gang für Geschwindigkeiten v > v1 keine Zugmomente mehr übertragen. Stattdessen kann sie nur noch Schiebemomente übertragen. Die Kupplung K2 überträgt dagegen zunächst weiter ein Zugmoment. Ähnlich wie beim Anhalten werden beide Kupplungen K1, K2 bei steigender Geschwindigkeit v zunächst weiter im Schlupf betrieben und die Drehzahl nMot des Verbrennungsmotors 12 wird bei Geschwindigkeiten v > v1 durch geeignete Ansteuerung der Kupplungen K1, K2 bei gleichzeitig in beiden Teilgetrieben TG1, TG2 eingelegten Gängen auf einen Sollwert eingestellt. Die Einstellung erfolgt bevorzugt durch eine Regelung.

Im Geschwindigkeitsbereich v1 < v < v2 überträgt die Kupplung K1 beim dargestellten Verlauf von nMot ein Schiebemoment, während die Kupplung K2 ein Zugmoment überträgt. Im Geschwindigkeitsbereich v2 < v < v3 überträgt die Kupplung K1 beim dargestellten Verlauf von nMot ein Zugmoment, während die Kupplung K2 ein Schiebemoment überträgt. Wenn das Zugmoment überwiegt, sinkt die Drehzahl nMot. Wenn das Schiebemoment überwiegt, steigt die Drehzahl nMot. Beim Erreichen der Geschwindigkeit v3 entspricht die Motordrehzahl nMot der Drehzahl nK1_Gang3 der Eingangswelle 28 des ersten Teilgetriebes TG1, so dass an der Kupplung K1 kein Drehzahlunterschied auftritt. Die Kupplung K1 wird in der dargestellten Ausgestaltung zu diesem Zeitpunkt so angesteuert dass sie bei dieser Geschwindigkeit komplett schließt, während die Kupplung K2 so angesteuert wird, dass sie komplett geöffnet ist. Dabei muss das komplette Öffnen der einen Kupplung nicht ganz genau mit dem kompletten Schließen der anderen Kupplung zusammenfallen. Wesentlich ist nur, dass bei gleichzeitig in beiden Teilgetrieben TG1, TG2 eingelegten Gängen wenigstens eine der beiden Kupplungen K1, K2 im Schlupf betrieben wird, damit das Doppelkupplungsgetriebe 14 nicht blockiert.

Ab der Geschwindigkeit v3, die bei der Darstellung der Fig. 5 etwa 15 km/h beträgt, wird die Komfort-Anfahrfunktion deaktiviert, und die Motordrehzahl steigt linear und mit einer durch die im Doppelkupplungsgetriebe 14 durch die Übersetzung des dritten Ganges bestimmten Steigung weiter an, bis ein weiterer Schaltvorgang erfolgt.

Die glatten nMot-Verläufe 64 in der Fig. 4 (Anhalten) und 78 in der Fig. 5 (Anfahren) weisen im Gegensatz zu dem Verlauf nMot-Verlauf 48 nach der Fig. 2, also nach dem Stand der Technik, keine ausgeprägten lokalen Maxima oder Minima mehr auf. Durch das Wegfallen dieser Extrema fallen auch die damit verbundenen Rucke und Schwingungsanregungen weg. Daraus ergibt sich ein wesentlich verbesserter Fahrkomfort.

Fig. 5 wurde mit Blick auf eine Anfahrsituation erläutert. Die durch die Fig. 5 vermittelten Zusammenhänge gelten jedoch auch für Fahrabschnitte mit konstanten Geschwindigkeiten und für ein Anhalten des Kraftfahrzeugs unter der Voraussetzung einer aktivierten Komfortfunktion (B = 1).

**Patentansprüche**

1. Verfahren zur Steuerung des Triebstrangs (10) eines Kraftfahrzeugs, der ein Doppelkupplungsgetriebe (14) mit einem ersten Teilgetriebe (TG1) und einer ersten Kupplung (K1) sowie mit einem zweiten Teilgetriebe (TG2) und einer zweiten Kupplung (K2) aufweist, wobei der Triebstrang (10) mit zeitgleich im ersten Teilgetriebe (TG1) eingelegtem Gang und im zweiten Teilgetriebe (TG2) eingelegtem Gang und zeitgleich im Schlupf betriebener erster Kupplung (K1) und zweiter Kupplung (K2) betrieben wird, **dadurch gekennzeichnet, dass** die erste Kupplung (K1) und die zweite Kupplung (K2) in aufeinander abgestimmter Weise so angesteuert werden, dass eine Drehzahl (nMot) des Verbrennungsmotors (12) einen vorbestimmten Wert annimmt oder beibehält.

2. Verfahren nach Anspruch 1, **dadurch gekennzeichnet, dass** der vorbestimmte Wert der Drehzahl (nMot) des Verbrennungsmotors (12) in Abhängigkeit von einer Geschwindigkeit (v) des Kraftfahrzeugs vorbestimmt wird.

3. Verfahren nach Anspruch 2, **dadurch gekennzeichnet, dass** es beim Verzögern des Kraftfahrzeugs durchgeführt wird.

4. Verfahren nach einem der Ansprüche 1 bis 3, **dadurch gekennzeichnet, dass** es beim Anfahren und/oder Beschleunigen des Kraftfahrzeugs aus Geschwindigkeiten durchgeführt wird, die unter einem vorbestimmten ersten Geschwindigkeitsschwellenwert (v3) liegen.

**5.** Verfahren nach einem der Ansprüche 1 bis 3, **dadurch gekennzeichnet, dass** es durchgeführt wird wenn ein Fahrpedalwinkel (Wped) kleiner als ein unterer Schwellenwert Wped_low ist und gleichzeitig eine Motordrehzahl (nMot) kleiner als ein Schwellenwert nMot_Grenz ist.

**6.** Verfahren nach Anspruch 5, **dadurch gekennzeichnet, dass** der Schwellenwert nMot_Grenz von der Fahrgeschwindigkeit (v) abhängig ist.

**7.** Verfahren nach einem der vorhergehenden Ansprüche, **dadurch gekennzeichnet, dass** es solange durchgeführt, bis die erste Kupplung (K1) im ersten Gang oder die zweite Kupplung (K2) im zweiten Gang nicht mehr schlupft und gleichzeitig die Fahrzeuggeschwindigkeit (v) einen Schwellenwert v_Grenz überschreitet oder oberhalb dieses Schwellenwerts liegt.

**8.** Verfahren nach einem der Ansprüche 1 bis 6, **dadurch gekennzeichnet, dass** es solange durchgeführt wird, bis ein Fahrpedalwinkel (Wped) einen Schwellenwert Wped_Grenz_Zug überschreitet und die zu schließende Kupplung nicht mehr schlupft oder bis der Fahrer manuell vom zweiten Gang in den ersten Gang zurückschaltet, die erste Kupplung (K1) nicht mehr schlupft, und die Motordrehzahl (nMot) einen Schwellenwert nMot_Grenz überschreitet.

**9.** Steuergerät (40) zur Steuerung des Triebstrangs (10) eines Kraftfahrzeugs, der ein Doppelkupplungsgetriebe (14) mit einem ersten Teilgetriebe (TG1) und einer ersten Kupplung (K1) sowie mit einem zweiten Teilgetriebe (TG2) und einer zweiten Kupplung (K2) aufweist, wobei der Triebstrang (10) mit zeitgleich im ersten Teilgetriebe (TG1) eingelegten Gang und im zweiten Teilgetriebe (TG2) eingelegten Gang und zeitgleich im Schlupf betriebener erster Kupplung (K1) und zweiter Kupplung (K2) betrieben wird, **dadurch gekennzeichnet, dass** das Steuergerät (40) dazu eingerichtet ist, die erste Kupplung (K1) und die zweite Kupplung (K2) in aufeinander abgestimmter Weise so anzusteuern, dass eine Drehzahl (nMot) des Verbrennungsmotors (12) einen vorbestimmten Wert annimmt oder beibehält.

**10.** Steuergerät (40) nach Anspruch 9, **dadurch gekennzeichnet, dass** es dazu eingerichtet ist, ein Verfahren nach einem der Ansprüche 2 bis 8 durchzuführen.

Fig.1

Fig.2

(Stand der Technik)

Fig.3

Fig.4

Fig.5